# EUROPEAN PATENT SPECIFICATION

(11) **EP 3 254 830 B1**
(45) Date of publication and mention of the grant of the patent: **07.04.2021**
(21) Application number: 17155096.5
(22) Date of filing: 08.02.2017
(51) Int. Cl.: B29C 65/02, B29C 45/14, B29C 45/00, B64C 1/06, B64C 1/12, B64G 1/22, B29L 31/30, B64C 1/00

(54) **REINFORCING COMPONENT FOR A STRUCTURE OF AN AIRCRAFT OR SPACECRAFT, AIRCRAFT OR SPACECRAFT, AND METHOD**
VERSTÄRKUNGSKOMPONENTE FÜR EINE STRUKTUR EINES LUFT- ODER RAUMFAHRZEUGS, LUFT- ODER RAUMFAHRZEUG UND VERFAHREN
COMPOSANT DE RENFORCEMENT DESTINÉ À UNE STRUCTURE D'UN AÉRONEF OU D'UN ENGIN SPATIAL, AÉRONEF OU ENGIN SPATIAL ET PROCÉDÉ

(30) Priority: 08.06.2016 DE 102016210123
(43) Date of publication of application: 13.12.2017
(73) Proprietor: Airbus Operations GmbH, 21129 Hamburg (DE)
(72) Inventor: SCHWING, Bernd, 21129 Hamburg (DE); TROULIS, Manos, 21129 Hamburg (DE); WERNER, Sven, 21129 Hamburg (DE)

(56) References cited:
- EP-A1- 1 892 079
- EP-A1- 2 881 238
- WO-A1-2013/142774

## Description

### FIELD OF THE INVENTION

The invention relates to a reinforcing component for a structure of an aircraft or spacecraft and to an aircraft or spacecraft comprising a reinforcing component of this type. The invention further relates to a method for manufacturing a reinforcing component.

### TECHNICAL BACKGROUND

Although the present invention is applicable to various structural components and in particular to structural reinforcing components in aircraft or spacecraft, the invention and the set of problems on which it is based are to be described in greater detail in the following using the example of a former for reinforcing a skin element for an aeroplane fuselage.

It has previously been proposed to configured formers, for example for the fuselage of an aeroplane, as fibre composite components, for example made of a carbon-fibre-reinforced plastics material.

In conventional fuselage structures, additional elements, which are intended to brace the fuselage former for example against tilting, are often additionally connected to the former by riveting or by means of bolts. Thus for example a former can be riveted in a conventional manner during the manufacture of the fuselage structure by means of connecting elements, which are often referred to as "clips" and may comprise a stabilising flange.

DE 10 2014 103 438 A1 and WO 2015/007455 A1 disclose manufacturing a primary structure connecting element for fixing an aeroplane skin to an aeroplane primary structure from a fibre-reinforced thermoplastic composition by injection moulding. For example, former-stabilising elements (cleats) are disclosed which are produced from a fibre-reinforced thermoplastic material by injection moulding. In turn, a cleat is connected to a former by means of rivets or bolts.

The construction of a fuselage structure using formers to which a plurality of further elements, such as cleats for stabilising, are attached individually by rivets has been found to be expensive.

EP 2 746 038 A1 discloses a fibre-reinforced reinforcing element comprising an integrated stabilising portion, the reinforcing element being manufactured starting from a hollow profile made of a fibre-reinforced plastics material using epoxy resin or phenol resin. Although in this way it is already possible to manufacture a reinforcing element of low weight much more simply and efficiently, further simplification of the manufacture of reinforcing elements for the aerospace industry would be desirable . EP2881238 A1, EP1892079 A1 or WO2013142774 A1 disclose aircraft components with thermoplastic matrix, including first component regions comprising continuous reinforcing fibres and second component regions comprising discontinuous reinforcing fibres or that are free of reinforcing fibres.

### SUMMARY OF THE INVENTION

Against this background, the object of the invention is to provide a reinforcing component which can be manufactured in an even simpler and further improved manner. Additionally, a correspondingly improved method of manufacture is to be provided.

According to the invention, this object is achieved by a reinforcing component having the features of claim 1 and/or by an aircraft or spacecraft having the features of claim 13 and/or by a method having the features of claim 13.

Accordingly, a reinforcing component for a structure of an aircraft or spacecraft is proposed which comprises a first component region for reinforcing at least one other element, in particular at least one skin portion, and at least one second component region. In particular, the first component region is elongate. The second component region is permanently connected to the first component region. The reinforcing component is formed using a thermoplastic plastics material in each of the first component region and the second component region. In the first component region, the thermoplastic plastics material forms a matrix in which continuous reinforcing fibres are embedded. Further, in the second component region, the reinforcing component comprises discontinuous reinforcing fibres or is free of reinforcing fibres.

Additionally, an aircraft or spacecraft comprising a reinforcing component of this type is proposed.

Further, the invention proposes a method for manufacturing a reinforcing component for a structure of an aircraft or spacecraft, a first component region, which is in particular elongate, for reinforcing at least one other element, and at least one second component region being formed and permanently interconnected. The reinforcing component is formed using a thermoplastic plastics material in each of the first component region and the second component region. Further, in the first component region, the thermoplastic plastics material forms a matrix in which continuous reinforcing fibres are embedded. In the second component region, the reinforcing component is formed with discontinuous reinforcing fibres or free of reinforcing fibres.

In particular, the reinforcing component according to the invention can be manufactured by the method according to the invention.

The idea behind the present invention is to construct the reinforcing component using a hybrid design. Whilst continuous reinforcing fibres are used in the first component region to provide particularly favourable mechanical properties, either a thermoplastic free of reinforcing fibres or a thermoplastic matrix having discontinuous reinforcing fibres embedded therein is used in the second component region, for example depending on the load. As a result, a first component region of a geometrically simpler basic shape can advantageously be formed using the continuous fibres, which require relatively considerable expense for correct embedding in the thermoplastic matrix. However, advantageously, the second component region, which contains discontinuous fibres or is free of reinforcing fibres, can be manufactured by a simpler method and if required in a more complicated geometry. The two component regions together form a hybrid reinforcing component, of which the geometric shape may be relatively complex overall, but which still has the properties of continuous fibres in a component region in which these properties are desired. The reinforcing component according to the invention may advantageously be manufactured at reduced expense. The use of thermoplastic plastics materials in the first and second component regions additionally makes possible permanent connection of the two component regions in a simple and reliable manner without the need for riveting. It is thus possible to produce an integral reinforcing component efficiently. Continuous and discontinuous fibre reinforcement of thermoplastic plastics materials can be combined in one component.

Advantageous embodiments and developments of the invention may be derived from the further dependent claims and from the description with reference to the drawings.

In an embodiment, the first component region and the second component region are produced by separately providing a first component element and a second component element and by subsequently welding the second component element to the first component element. As a result, the first and second component regions can be reliably connected in a simple manner and without the need for additional connecting elements such as rivets.

In a development, the second component element is preferably injection-moulded. By injection moulding, second component elements can be produced expediently and efficiently even in larger numbers and with a relatively complex geometry.

In an alternative embodiment, the first component region and the second component region are produced by providing a first component element and subsequently spraying the second component region on by injection moulding. It may in particular be sprayed on by overmoulding, in which the first component element is laid in an injection moulding mould having additional cavities for forming the second component regions and the second component regions are sprayed on by means of the additional cavities.

In an embodiment of the method, to produce the first and second component regions, a first component element and a second component element are provided separately and subsequently welded together. In an alternative embodiment, to produce the first and second component regions, a first component element is provided and the second component region is produced by spraying the second component region on in an injection moulding method.

In an advantageous embodiment, short or long fibres are embedded in the thermoplastic plastics material as discontinuous reinforcing fibres in the second component region. Reinforcing fibres formed as short fibres may in particular be of a length of up to approximately 1 mm, whilst reinforcing fibres formed as long fibres may in particular be of a length of up to approximately 50 mm. Short or long fibres of this type can be processed well by injection moulding, for example for producing the second component element before the welding or for spraying the second component region on by overmoulding.

In a preferred embodiment, the reinforcing component is formed as a former or a former element, in particular as a former or former element for a fuselage cell structure of the aircraft or spacecraft. A former element should be understood to mean in particular a sub-piece of a former which extends annularly along the peripheral direction of a fuselage. A former element of this type may for example be used in a fuselage shell for the aircraft or spacecraft.

However, it is also conceivable to form other reinforcing components for the structure of the aircraft or spacecraft in a manner according to the invention.

For example, in an alternative embodiment, the reinforcing component may be formed as a component of a door frame structure for an aircraft or spacecraft.

In an embodiment, the second component region is formed and arranged for reinforcing the first component region at least in portions and/or for stabilising the first component region against tilting at least in portions. Specifically if the reinforcing component is to be stabilised at a plurality of points along the longitudinal extension thereof, the manufacturing outlay can be reduced as a result of the hybrid configuration according to the invention of the reinforcing component, for example by avoiding rivet connections. In particular, even in the case of second component elements which are injection-moulded and subsequently welded to the first component element, a further reduction in the manufacturing outlay can be achieved by standardisation.

The first component region is formed with a web and with a flange connected to the web. The second component region for reinforcing the web is arranged orientated transverse to the web and the flange in the manner of a rib. Effective stabilisation of the reinforcing component is thus achieved.

In a further development, the first component region further comprises a foot region connected to the web for coupling the reinforcing component to the other element, in particular to a skin portion, the second component region being permanently connected to the foot region and the web and bracing the web against the foot region. This further improves the stabilisation and reinforcement of the web. In particular, the foot region may be a sub-region of a further flange connected to the web or a flange-shaped portion, connected to the web, of the first component.

In an embodiment of the invention, the second component region is formed as a belt permanently connected to the first component region or formed with a belt of this type. The belt may in particular be provided in addition to a first belt or flange already formed in the first component region. This can greatly simplify the production of a reinforcing component which is for example to have a plurality of belts or flanges so as to perform the mechanical functions thereof. For example, using this embodiment, a first component region may advantageously be shaped into a comparatively simple cross-sectional shape, for example a Z-shape, for example by folding or deformation of a semi-finished product, whilst the additionally desired belt or flange may for example be permanently connected to the first component region as a second component region for example by spraying on or welding on.

Additionally, in particular, in further embodiments second component regions for stabilising the web, which extend for example transverse to the web and to the longitudinal direction of the reinforcing component in the manner of ribs, and at least one further second component region in the form of an additional belt may be combined in a reinforcing component. The regions which stabilise the web and the additional belt may also be combined as sub-regions in a shared second component region.

In an advantageous embodiment, the second component region is provided with at least one means for attaching cabin components and/or systems or forms a holding means for cabin components and/or systems. In this embodiment, the possibility of providing the second component region with relatively complex geometries makes it possible to integrate holding functions, making it possible to omit attaching additional holders and reduce outlay and weight.

In particular, in embodiments, second component regions for stabilising the first component region and second component regions for holding cabin or system components may be present as separate component regions, each permanently connected to the first component region. Advantageously, component regions of this type having different functions are thus combined in a reinforcing component, but can still be manufactured efficiently and expediently, in a manner appropriate to the associated function.

In an advantageous embodiment, at least one component made of a metal material may be integrated into the second component region at least in regions by injection moulding or spraying. For example, the component made of the metal material may be an element of the means for attaching the cabin components and/or systems, for example a socket, for example with or without an internal thread. By means of the injection moulding, the additional metal component can be integrated into the reinforcing component reliably and rapidly in various ways.

In particular, the reinforcing component may have a plurality of second component regions. The second component regions may be formed identically, making possible further reductions in outlay and costs by way of standardisation.

The reinforcing fibres in the first and second component region may in each case for example be glass fibres, carbon fibres or other suitable fibres or combinations thereof, it being understood that the reinforcing fibres in the first component region are endless or continuous fibres, whereas reinforcing fibres for the second component region are discontinuous fibres. This makes it possible to manufacture a reinforcing component formed as a hybrid thermoplastic fibre composite component efficiently.

In particular, in an embodiment, it may be provided that the reinforcing fibres in the first component region are formed using a material different from the material of the reinforcing fibres in the second component region.

For example, in an embodiment, discontinuous glass fibres, for example short glass fibres, may be embedded in the thermoplastic plastics material as a matrix in the second component region, whilst in the first component region continuous carbon fibres are embedded in the thermoplastic plastics matrix thereof. In this way, the first component region can be given particularly good mechanical properties for the reinforcing function thereof, whilst as a result of the use of discontinuous glass fibres in the second component region electrical conductivity can be eliminated or reduced. This can advantageously contribute to preventing or reducing the occurrence of galvanic corrosion if a metal component, for example made of an aluminium material, is connected to the second component region.

In other embodiments, however, it may be provided that the reinforcing fibres in the first and second component regions are formed from the same material. For example, carbon fibres may be provided in both component regions.

In a development, it may be provided that the thermoplastic plastics material in the first component region is different from the thermoplastic plastics material in the second component region. In particular, the respective thermoplastic plastic materials in the first and second component regions may differ in the respective melting points and/or glass transition temperatures thereof. This may be advantageous for carrying out a welding process to connect the first and second component elements or for spraying on the second component region. For example, in this way it would be possible to influence, in a targeted manner, which of the thermoplastic materials starts to soften and/or melt first during heating.

In particular high-grade thermoplastics are possible as thermoplastic plastics materials. For example, in the first and/or second component region, a semi-crystalline thermoplastic may be used as the thermoplastic plastics material in each case, for example a polyaryletherketone (PAEK), a polyetheretherketone (PEEK) or the like.

The above embodiments and developments of the invention are applicable analogously to the reinforcing component, the aircraft or spacecraft and the method according to the invention.

The above embodiments and developments may be combined with one another in any desired manner within reason. Further possible embodiments, developments and implementations of the invention also include combinations not explicitly mentioned of features of the invention disclosed above or in the following in relation to the embodiments. In particular, a person skilled in the art will also add individual aspects to each basic form of the present invention as improvements or additions.

### CONTENTS OF THE DRAWINGS

The present invention is described in greater detail in the following by way of the embodiments set out in the schematic drawings, in which:
Fig. 1 is a perspective view of an aeroplane in which reinforcing components in accordance with embodiments of the invention may be used;
Fig. 2 is a side view of the aeroplane of Fig. 1;
Fig. 3 shows a reinforcing component, formed as a former, in accordance with a first embodiment, together with an example skin element of a fuselage skin;
Fig. 4 is a schematic sectional view A-A of the reinforcing component of Fig. 3;
Fig. 5 shows a sub-region of the reinforcing component of Fig. 3, again in the section A-A, in accordance with a variant of the first embodiment;
Fig. 5A is a perspective view of a sub-region of the reinforcing component of Fig. 3 in a further variant of the first embodiment;
Fig. 6 shows a reinforcing component formed as a former in accordance with a second embodiment of the invention; and
Fig. 7 is a schematic sectional view B-B of the reinforcing component of Fig. 6.

The accompanying drawings are intended to provide a further understanding of the embodiments of the invention. They illustrate embodiments, and are intended to explain principles and concepts of the invention in connection with the description. Other embodiments and many of the stated advantages can be seen from the drawings. The elements of the drawings are not necessarily to scale.

In the drawings, unless specified otherwise, like, functionally equivalent and equivalently acting elements, features and components are provided each with like reference numerals.

### DESCRIPTION OF EMBODIMENTS

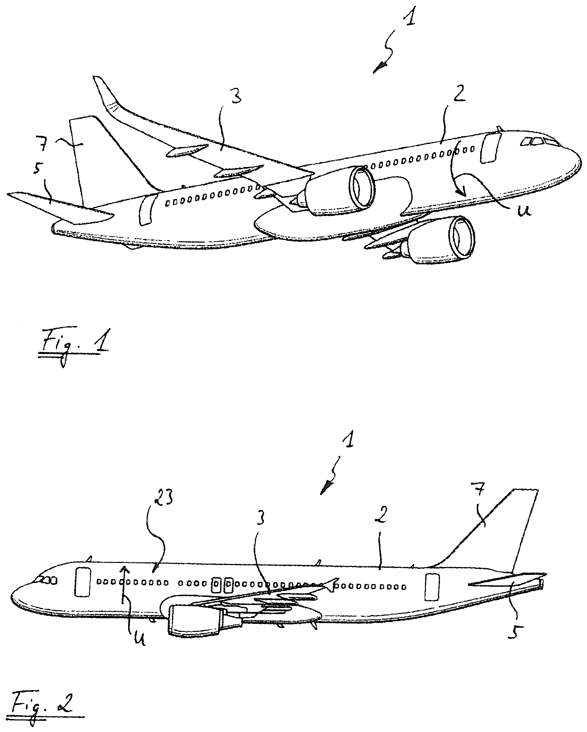

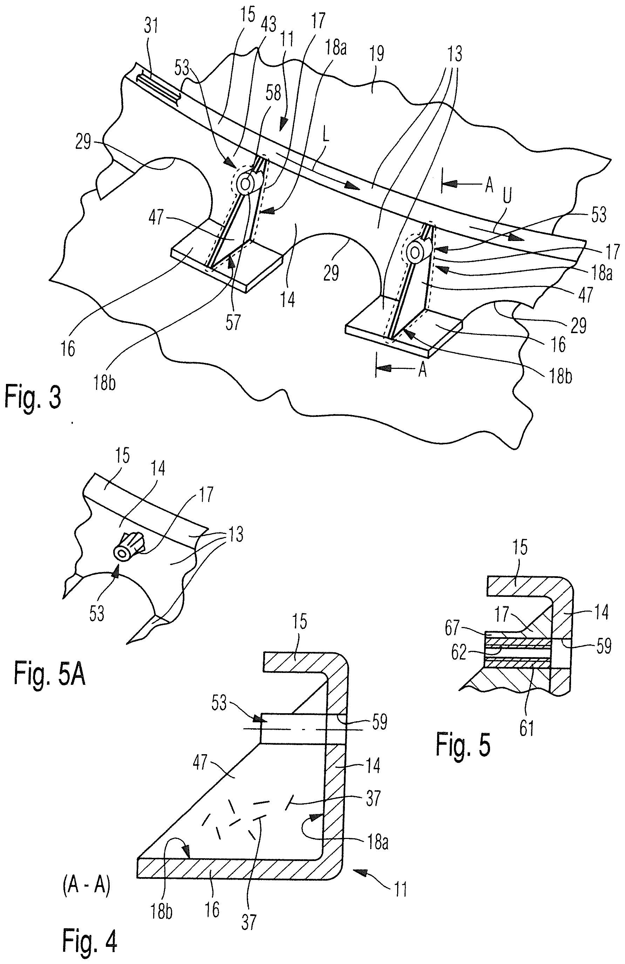

Fig. 1 and 2 show an aircraft in the form of a passenger aeroplane 1, which comprises a fuselage 2, aerofoils 3 and tail units 5 and 7. Reinforcing components in accordance with the embodiments of the invention disclosed in the following with reference to Fig. 3 to 7 may be used in the aeroplane 1 of Fig. 1 and 2.

A first embodiment of a reinforcing component 11 formed as a former for a fuselage structure of the aeroplane 1 of Fig. 1, 2 is shown schematically in portions in Fig. 3.

The reinforcing component 11 of Fig. 3 comprises a first component region 13 and a plurality of second component regions 17, merely a portion of the reinforcing component 11 comprising two second component regions 17 being shown in Fig. 3 for reasons of clarity. For illustrative purposes, the two second component regions 17 are each enclosed in a dashed line in Fig. 3. The second component regions 17 are formed identically in the first embodiment.

The first component region 13 is of an elongate shape curved along a longitudinal direction L of the reinforcing component 11, and extends in the aeroplane 1 in the peripheral direction U of the fuselage 2. A function of the first component region 13 is to reinforce a skin portion 19 of a fuselage skin 23 of the fuselage 2. For this purpose, the first component region 13 comprises a web 14 and a flange 15 integrally connected to the web 14, the web 14 and the flange 15 extending along the longitudinal direction L of the reinforcing component 11 in the peripheral direction U of the fuselage 2. The first component region 13 further comprises foot regions 16 integrally connected to the web 14 for coupling the reinforcing component 11 to the skin portion 19. Further, on the side facing the skin portion 19, the first component region 13 comprises clearances 29, for example for passing stringers (not shown in the drawing) through as further reinforcing elements for the skin portion 19.

The second component regions 17 are each formed as a wall-like region having a substantially triangular basic shape, and are each permanently connected to one of the foot regions 16 and to the web 14. In this way, the two component regions 17 brace the first component region 13, and in particular the web 14, against the foot regions 16, reinforcing and stabilising the web 14, for example against tilting. For this purpose, the second component regions 17 are orientated transverse to the web 14, transverse to the foot region 16 and transverse to the flange 15 in the manner of ribs; see also the sectional view of Fig. 4. In particular, in the embodiment shown, each of the second component regions 17 extends transverse to the longitudinal direction L of the reinforcing component 11, and in particular substantially perpendicular to the web 14 and the foot region 16, as a wall-like element.

In the reinforcing component 11 of Fig. 3, the first and second component regions 13 and 17 are permanently interconnected. Fig. 3 shows that each of the two component regions 17 is rigidly connected to the web 14 in a first connection region 18a and to the associated foot region 16 in a second connection region 18b.

The reinforcing component 11 of the first embodiment is an integral fibre composite component of a hybrid design, the reinforcing component 11 being formed using a thermoplastic plastics material both in the first component region 13 and in the second component region 17. The same thermoplastic plastics material may be used for the first and second component regions 13 and 17, or it may be provided that the thermoplastic plastics material in the first component region 13 is different from the thermoplastic plastics material in the second component regions 17.

In the first component region 13, the thermoplastic plastics material forms a matrix in which continuous reinforcing fibres are embedded. Some of these reinforcing fibres are denoted by reference numeral 31 in Fig. 3 by way of example. Continuous reinforcing fibres may also be referred to as "endless" fibres. Continuous fibres of this type are carefully arranged in a targeted manner in such a way that the first component region 13 acquires the desired mechanical properties. The reinforcing fibres 31 may in particular be arranged in such a way that they can absorb the incoming loads as well as possible. It will be appreciated that the fibres 31 schematically illustrated in Fig. 3 are merely to be understood as an example, and that reinforcing fibres or bundles of reinforcing fibres may be provided in various orientations and arrangements within the first component region 13, depending on the expected load on the reinforcing component 11. The continuous fibres 31 have a targeted arrangement and orientation within the first component region 13 for this purpose, and may extend as "endless" fibres for example from one end to the other of the reinforcing component 11. The reinforcing fibres 31 may for example be carbon fibres, glass fibres or other suitable reinforcing fibres or combinations thereof.

The second component regions 17 may be formed free of reinforcing fibres using a thermoplastic plastics material. In advantageous and preferred variants of the first embodiment, however, the thermoplastic plastics material of the second component regions 17 forms a matrix, in which discontinuous reinforcing fibres, shown schematically by way of example in Fig. 4 and denoted by reference numeral 37, are embedded. The discontinuous reinforcing fibres 37 are preferably short or long fibres. In particular, reinforcing fibres 37 formed as short fibres may be of a length of up to approximately 1 mm, or reinforcing fibres 37 formed as long fibres may be of a length of up to approximately 50 mm.

The reinforcing fibres 37 in the second component regions 17 may also be carbon fibres, glass fibres or other suitable fibres or combinations thereof.

The reinforcing fibres 31 in the first component region 13 and the reinforcing fibres 37 in the second component region 17 may be formed using the same material or using different materials. In an advantageous variant of the first embodiment, the second component regions 17 may each have glass fibres as reinforcing fibres 37, whilst the continuous reinforcing fibres 31 of the first component region 13 are carbon fibres. In another variant, the fibres 31 and the fibres 37 may be carbon fibres in each case.

To manufacture the reinforcing component 11 in accordance with the first embodiment, shown in Fig. 3, initially a first component element 43 for forming the first component region 13 is provided. The first component element 43 may for example be manufactured by way of a deformation process and optionally a subsequent solidification from a planar semi-finished product, which contains a thermoplastic plastics material as a matrix and a reinforcing fibre arrangement. In cross section, the first component element 43 (see Fig. 4) may for example form a C-shaped profile having limbs of different lengths, the lower leg of the C-shape in Fig. 4 forming a skin-side flange of the component element 43. To form the foot regions 16 and the clearances 29, the component element 43 may for example be processed further after the C-shaped basic shape thereof is produced, or the clearances 19 are provided by corresponding shaping actually during the formation of the first component element 43. In the embodiment shown, the first component element 43 may be considered a type of "base former" or base part for the former 11. In Fig. 3, the foot portions 16 form flange-like portions of the first component region 13, which are integrally connected to the web 14.

To produce the second component regions 17, a plurality of identical second component elements 47 are manufactured by injection moulding, the second component elements 47 initially still being present as separate elements after the injection moulding. The second component elements 47 are thus injection moulded from the thermoplastic plastics material, containing the discontinuous fibres 37, for the second component region 17. Standardising the second component elements 47 and the injection moulding thereof makes possible expedient manufacture thereof even for a relatively complex geometry.

After the second component elements 47 are manufactured separately, they are welded to the first component element 43 to manufacture the reinforcing component 11 of Fig. 3. For this purpose, the first and/or second component element 43, 47 may preferably be heated locally to a suitable temperature and the component elements 43, 47 subsequently joined together. The welding subsequently takes place in the connection regions 18a,b. The component elements 43, 47 may for example already be positioned relatively to one another by a suitable device prior to heating. Preferably, the component elements 43, 47 are held against one another under pressure by regions of the relevant thermoplastic matrix which have melted or at least sufficiently softened during heating until sufficient solidification takes place.

Thus, by using thermoplastic plastics materials for the first and second component elements 43, 47, as disclosed above, it is advantageously possible to weld each of the second component elements 47 to the first component element 43. A reliable, permanent connection of the component elements 43 and 47 is thus achieved, and a unitary reinforcing component 11 comprising the first and second component regions 13 and 17 is formed. Additional connecting elements such as rivets or bolts are not required, and this saves costs and operating time. Instead, the reinforcing component 11 of Fig. 3 may be produced as an integral former having a relatively complex geometry in an advantageous, simple and cost-effective method.

In a variant, the reinforcing component 11 of Fig. 3 may be manufactured in such a way that initially the first component element 43 is provided as disclosed above and second component regions 17 are subsequently sprayed on by injection moulding. For this purpose, the first component element 43 may be laid in a suitable mould which has additional, suitably shaped cavities for casting the second component regions 17. Subsequently, the second component regions 17 are cast on by injection moulding, a thermoplastic matrix having discontinuous reinforcing fibres 37 contained therein again being used. In this overmoulding, the second component regions 17 are likewise permanently and reliably connected to the first component region 13, without rivets or bolts being required as additional connecting elements.

Fig. 3 and 4 further show that the second component regions 17 are each provided with a means 53 for attaching cabin components and/or systems. Thus in an advantageous manner which reduces weight and outlay, a holding function is also integrated into the second component region 17 and thus into the reinforcing component 11 formed as a fuselage former. This may for example facilitate fastening cabin or system components in a manner orientated towards the formers. The means 53 may form a hard point for this purpose.

Fig. 3 further schematically shows that in the first embodiment the means may be formed using a sleeve 57, which may be substantially cylindrical, comprising a through-opening 58. So as further to facilitate attaching the cabin components or systems, the first component region 13 is formed in the region of the web 14 for example with a through-opening 59 orientated with respect to the through-opening 58, for example concentric (see Fig. 4). Alternatively, the through-opening 59 may be omitted and the opening 58 may be formed in the manner of a blind hole.

In a variant shown schematically in Fig. 5 of the first embodiment, a metal socket 61 is integrated into the second component region 17. For this purpose, in the variant of Fig. 5, the metal socket 61 is enclosed peripherally with the thermoplastic plastics material comprising added discontinuous fibres by overmoulding it in an injection moulding or spraying process. In this way, the metal socket 61 is enclosed by a sleeve-like portion 67 in the peripheral direction thereof, and thus held securely and reliably in the second component region 17. The metal socket 61 may for example be used for fastening the cabin components or systems, and thus forms the fastening means 53 or at least part thereof. In variants, the internal thread 62 may be omitted or replaced with other fastening or connection means suitable for air or space travel.

Alternatively or additionally, in variants it may be provided that a means 53 without a reinforcing function for the web 14 is permanently connected to the first component region 13 and thus for example to the web 14, for example by welding or spraying on as disclosed above. In a variant of this type, the second component region 17 may itself form a holding means for cabin components and/or systems. A variant of this type of the first embodiment is shown schematically by way of example in Fig. 5A, other embodiments being conceivable.

In the first embodiment, in which further components can be attached to the former 11 using the means 53, it may be found to be advantageous to use continuous carbon fibres in the first component region 13 and to use discontinuous glass fibres in the second component regions 17. The components (not shown in the drawings) attached using the means 53 may for example be made of metal materials, for example aluminium. Whilst the carbon fibres 31 provide the desired mechanical load capacity in the first component region 13, the glass fibres 37 in the second component region 17 reduce or prevent the electric conductivity of this component region. When metal components are attached using the means 53, the occurrence of galvanic corrosion is thus advantageously prevented or inhibited.

The foot regions 16 are for coupling the reinforcing component 11 to another element, in particular to the skin portion 19 to be reinforced. For this purpose, the foot portions 16 may for example be connected directly or indirectly to an inner face of the skin portion 19, in particular by riveting or by means of bolts. However, other types of connection of the foot regions 16 to the skin portion 19 are conceivable instead. In a preferred variant, the skin portion 19 may also be formed with a thermoplastic plastics material as a matrix and with reinforcing fibres, such as carbon fibres, embedded in the thermoplastic plastics material, for example with the help of a suitable semi-finished product. On the finished skin portion 19, which has for example been solidified under pressure by squeeze moulding, made of a thermoplastic fibre composite material, the reinforcing component 11 can be welded onto the inside of the skin portion 19 as a former, the thermoplastic plastics material of the skin portion 19 and/or of the foot region 16 softening or melting and reliable connection of the reinforcing component 11 and the skin portion 19 being achieved by resolidification.

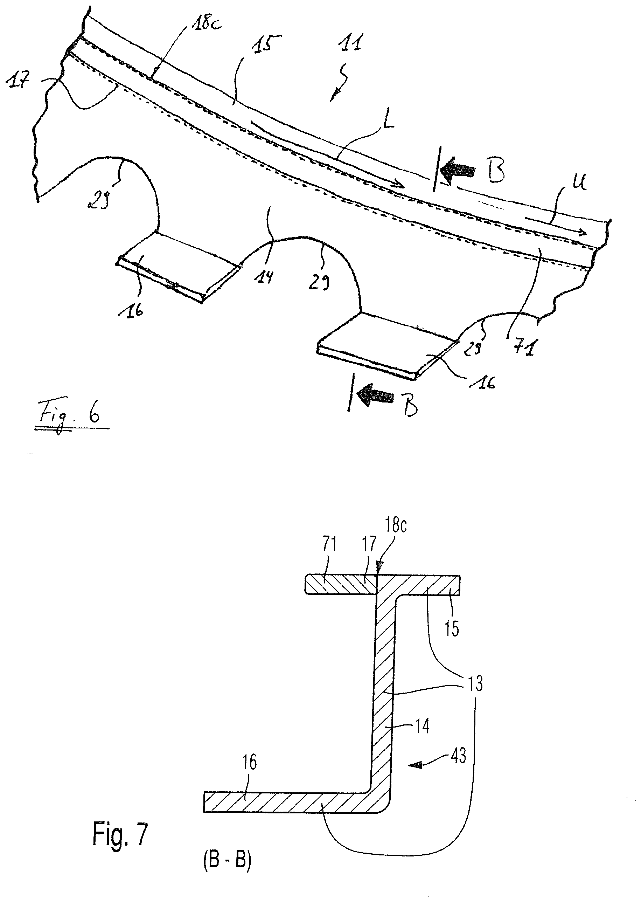

Fig. 6 and 7 schematically show a second embodiment of the invention. The above statements are applicable analogously to the embodiment of Fig. 6 and 7, the differences from the first embodiment being disclosed in the following.

In the second embodiment, the second component region 17 is formed as an additional flange or belt 71, which is permanently connected to the first component region 13 so as to form a reinforcing component 11. The belt 71 may in particular be welded on or sprayed on, and contains a thermoplastic plastics material which preferably contains discontinuous reinforcing fibres.

To manufacture the reinforcing component 11 in accordance with the embodiment of Fig. 6, 7, which again is a former for an aeroplane fuselage, a first component element 43 is initially formed from a planar semi-finished product, for which purpose the semi-finished product is brought into a geometry substantially Z-shaped in cross section (see Fig. 7) and comprising a web 14. Flanges are attached to the two ends of the web 14, foot regions 16 being formed from the lower flange in Fig. 7 and it being possible for the flange 15 to be present continuously along the longitudinal direction of the reinforcing component 11 (see Fig. 6).

The Z-shaped cross-sectional geometry of the first component element 43, which forms the first component region 13 in Fig. 6, 7, is supplemented with the additional belt 71 as a second component region 17. The belt 71 is provided in addition to the flange 15, and contributes to fulfilling the mechanical function of the reinforcing component 11. Because the belt 71 is formed using discontinuous reinforcing fibres and connected to the first component region 13 by spraying on or welding on in a connection region 18c, the manufacture of a reinforcing component 11 comprising two belts or flanges 71, 15 (see Fig. 7) is greatly simplified. In particular, the first component region 13 can be formed in a simple manner at low outlay using a planar semi-finished product and for example subsequent solidification. In variants of the second embodiment, the belt 71 may alternatively be arranged on the web 14 at a different height from the flange 15 with respect to the foot region 16.

In all above-disclosed embodiments, the thermoplastic plastics material in the first component region 13 may be different from the thermoplastic plastics material in the second component regions 17, in particular in terms of the associated melting temperature and/or glass transition temperature thereof. In this way, the melting or softening properties of the thermoplastic plastics materials can be influenced in a more targeted manner during the welding or spraying-on process. However, in all above-disclosed embodiments, it is conceivable for the first and second component regions 13, 17 to use the same thermoplastic plastics material.

In the above-described embodiments, for example high-grade thermoplastics, such as semi-crystalline thermoplastics, are used as the thermoplastic plastics materials in the first and/or second component regions 13, 17, for example a polyaryletherketone (PAEK), a polyetheretherketone (PEEK) or the like.

In particular, the hybrid design for the reinforcing component may be of use not only in formers, but also in other reinforcing components, in particular for aircraft or spacecraft.

### List of reference numerals

- 1: Aeroplane
- 2: Fuselage
- 3: Aerofoil
- 5: Tail unit
- 7: Tail unit
- 11: Reinforcing component
- 13: First component region
- 14: Web
- 15: Flange
- 16: Foot region
- 17: Second component region
- 18a: Connection region
- 18b: Connection region
- 18c: Connection region
- 19: Skin portion
- 23: Fuselage skin
- 29: Clearance
- 31: Continuous reinforcing fibres
- 37: Discontinuous reinforcing fibres
- 43: First component element
- 47: Second component element
- 53: Means
- 57: Sleeve
- 58: Through-opening
- 59: Through-opening
- 61: Metal socket
- 62: Internal thread
- 67: Sleeve-like portion
- 71: Belt

- L: Longitudinal direction (of reinforcing component)
- U: Peripheral direction (of fuselage)

## Claims

1. Reinforcing component (11) for a structure of an aircraft or spacecraft (1), comprising a first component region (13), which is elongate, for reinforcing at least one other element (19), and
comprising at least one second component region (17), which is permanently connected to the first component region (13);
wherein the first component region (13) is formed with a web (14) and with a flange (15) connected to the web (14), ;
wherein the reinforcing component (11) is formed using a thermoplastic plastics material in each of the first component region (13) and the second component region (17); and
wherein, in the first component region (13), the thermoplastic plastics material forms a matrix in which continuous reinforcing fibres (31) are embedded, and, in the second component region (17), the reinforcing component (11) comprises discontinuous reinforcing fibres (37) or is free of reinforcing fibres,
**characterised in that** the second component region (17) for reinforcing the web (14) is arranged orientated transverse to the web (14) and the flange (15) in the manner of a rib.

2. Reinforcing component according to claim 1,
**characterised in that** the first component region (13) and the second component region (17) are produced by separately providing a first component element (43) and a second component element (47) and by subsequently welding the second component element (47) to the first component element (43).

3. Reinforcing component according to claim 2,
**characterised in that** the second component element (47) is injection-moulded.

4. Reinforcing component according to claim 1,
**characterised in that** the first component region (13) and the second component region (17) are produced by providing a first component element (43) and subsequently spraying the second component region (17) on by injection moulding.

5. Reinforcing component according to any of the preceding claims,
**characterised in that** short or long fibres are embedded in the thermoplastic plastics material as reinforcing fibres (37) in the second component region (17).

6. Reinforcing component according to any of the preceding claims,
**characterised in that** the reinforcing component (11) is formed as a former or a former element.

7. Reinforcing component according to any of the preceding claims,
**characterised in that** the second component region (17) is formed and arranged for reinforcing the first component region (13) at least in portions and/or for stabilising the first component region (13) against tilting at least in portions.

8. Reinforcing component according to any of the preceding claims,
**characterised in that** the first component region (13) further comprises a foot region (16) connected to the web (14) for coupling the reinforcing component (11) to the other element (19), in particular to a skin portion (19), the second component region (17) being permanently connected to the foot region (16) and the web and bracing the web (14) against the foot region (16).

9. Reinforcing component according to any of the preceding claims,
**characterised in that** the second component region (17) is formed with a belt (71) permanently connected to the first component region (13).

10. Reinforcing component according to any of the preceding claims,
**characterised in that** the second component region (17) is provided with at least one means (53) for attaching cabin components and/or systems or forms a holding means for cabin components and/or systems.

11. Reinforcing component according to any of the preceding claims,
**characterised in that** the reinforcing component (11) comprises a plurality of second component regions (17).

12. Aircraft or spacecraft (1) comprising a reinforcing component (11) according to any of the preceding claims.

13. Method for manufacturing a reinforcing component (11) for a structure of an aircraft or spacecraft (1),
wherein a first component region (13), which is elongate, for reinforcing at least one other element (19), and at least one second component region (17) are formed and permanently interconnected, wherein the first component region (13) is formed with a web (14) and with a flange (15) connected to the web (14), wherein the reinforcing component (11) is formed using a thermoplastic plastics material in each of the first component region (13) and the second component region (17), and
wherein, in the first component region (13), the thermoplastic plastics material forms a matrix in which continuous reinforcing fibres (31) are embedded, and,
in the second component region (17), the reinforcing component (11) is formed with discontinuous reinforcing fibres (37) or free of reinforcing fibres, **characterised in that** the second component region (17) for reinforcing the web (14) is arranged orientated transverse to the web (14) and the flange (15) in the manner of a rib.

14. Method according to claim 13,
**characterised in that**, to produce the first and second component regions (13, 17), a first component element (43) and a second component element (47) are provided separately and subsequently welded together, or **in that**, to produce the first and second component regions (13, 17), a first component element (43) is provided and the second component region (17) is produced by spraying the second component region (17) on in an injection moulding method.

## Patentansprüche

1. Verstärkungsbauteil (11) für eine Struktur eines Luft- oder Raumfahrzeugs (1), umfassend einen ersten Bauteilbereich (13), der länglich ist, zur Verstärkung mindestens eines weiteren Elements (19), und
mit mindestens einem zweiten Bauteilbereich (17), der mit dem ersten Bauteilbereich (13) fest verbunden ist;
wobei der erste Bauteilbereich (13) mit einem Steg (14) und mit einem mit dem Steg (14) verbundenen Flansch (15) ausgebildet ist;
wobei das Verstärkungsbauteil (11) unter Verwendung eines thermoplastischen Kunststoffmaterials in jedem des ersten Bauteilbereichs (13) und des zweiten Bauteilbereichs (17) gebildet ist; und
wobei im ersten Bauteilbereich (13) der thermoplastische Kunststoff eine Matrix bildet, in die kontinuierliche Verstärkungsfasern (31) eingebettet sind, und im zweiten Bauteilbereich (17) das Verstärkungsbauteil (11) aus diskontinuierlichen Verstärkungsfasern (37) besteht oder frei von Verstärkungsfasern ist,
**dadurch gekennzeichnet, dass** der zweite Bauteilbereich (17) zur Verstärkung des Steges (14) rippenartig quer zum Steg (14) und zum Flansch (15) orientiert angeordnet ist.

2. Verstärkungsbauteil gemäß Anspruch 1,
**dadurch gekennzeichnet, dass** der erste Bauteilbereich (13) und der zweite Bauteilbereich (17) durch separates Bereitstellen eines ersten Bauteilelements (43) und eines zweiten Bauteilelements (47) und durch anschließendes Verschweißen des zweiten Bauteilelements (47) mit dem ersten Bauteilelement (43) hergestellt werden.

3. Verstärkungsbauteil gemäß Anspruch 2,
**dadurch gekennzeichnet, dass** das zweite Bauteilelement (47) spritzgegossen ist.

4. Verstärkungsbauteil gemäß Anspruch 1,
**dadurch gekennzeichnet, dass** der erste Bauteilbereich (13) und der zweite Bauteilbereich (17) durch Bereitstellen eines ersten Bauteilelements (43) und anschließendes Aufspritzen des zweiten Bauteilbereichs (17) durch Spritzgießen hergestellt werden.

5. Verstärkungsbauteil nach einem der vorhergehenden Ansprüche,
**dadurch gekennzeichnet, dass** im zweiten Bauteilbereich (17) kurze oder lange Fasern als Verstärkungsfasern (37) in das thermoplastische Kunststoffmaterial eingebettet sind.

6. Verstärkungsbauteil nach einem der vorhergehenden Ansprüche,
**dadurch gekennzeichnet, dass** das Verstärkungsbauteil (11) als Former oder Formelement ausgebildet ist.

7. Verstärkungsbauteil nach einem der vorhergehenden Ansprüche,
**dadurch gekennzeichnet, dass** der zweite Bauteilbereich (17) zur zumindest abschnittsweisen Verstärkung des ersten Bauteilbereichs (13) und/oder zur zumindest abschnittsweisen Stabilisierung des ersten Bauteilbereichs (13) gegen Verkippen ausgebildet und angeordnet ist.

8. Verstärkungsbauteil nach einem der vorhergehenden Ansprüche,
**dadurch gekennzeichnet, dass** der erste Bauteilbereich (13) ferner einen mit dem Steg (14) verbundenen Fußbereich (16) zur Kopplung des Verstärkungsbauteils (11) mit dem anderen Element (19), insbesondere mit einem Hautteil (19), aufweist, wobei der zweite Bauteilbereich (17) mit dem Fußbereich (16) und dem Steg fest verbunden ist und den Steg (14) gegen den Fußbereich (16) verspannt.

9. Verstärkungsbauteil nach einem der vorhergehenden Ansprüche,
**dadurch gekennzeichnet, dass** der zweite Bauteilbereich (17) mit einem Gurt (71) ausgebildet ist, der fest mit dem ersten Bauteilbereich (13) verbunden ist.

10. Verstärkungsbauteil nach einem der vorhergehenden Ansprüche,
**dadurch gekennzeichnet, dass** der zweite Bauteilbereich (17) mit mindestens einem Mittel (53) zur Befestigung von Kabinenkomponenten und/oder -systemen versehen ist oder ein Haltemittel für Kabinenkomponenten und/oder -systeme bildet.

11. Verstärkungsbauteil nach einem der vorhergehenden Ansprüche,
**dadurch gekennzeichnet, dass** das Verstärkungsbauteil (11) eine Vielzahl von zweiten Bauteilbereichen (17) umfasst.

12. Luft- oder Raumfahrzeug (1) mit einem Verstärkungsbauteil (11) nach einem der vorhergehenden Ansprüche.

13. Verfahren zur Herstellung eines Verstärkungsbauteils (11) für eine Struktur eines Luft- oder Raumfahrzeugs (1),
wobei ein erster, länglicher Bauteilbereich (13) zur Verstärkung mindestens eines anderen Elements (19) und mindestens ein zweiter Bauteilbereich (17) ausgebildet und fest miteinander verbunden sind, wobei der erste Bauteilbereich (13) mit einem Steg (14) und mit einem mit dem Steg (14) verbundenen Flansch (15) ausgebildet ist,
wobei das Verstärkungsbauteil (11) unter Verwendung eines thermoplastischen Kunststoffmaterials in jedem des ersten Bauteilbereichs (13) und des zweiten Bauteilbereichs (17) gebildet ist, und
wobei im ersten Bauteilbereich (13) der thermoplastische Kunststoff eine Matrix bildet, in die kontinuierliche Verstärkungsfasern (31) eingebettet sind, und im zweiten Bauteilbereich (17) das Verstärkungsbauteil (11) mit diskontinuierlichen Verstärkungsfasern (37) oder verstärkungsfaserfrei ausgebildet ist,
**dadurch gekennzeichnet, dass** der zweite Bauteilbereich (17) zur Verstärkung des Steges (14) rippenartig quer zum Steg (14) und zum Flansch (15) orientiert angeordnet ist.

14. Verfahren gemäß Anspruch 13,
**dadurch gekennzeichnet, dass** zur Herstellung des ersten und zweiten Bauteilbereichs (13, 17) ein erstes Bauteilelement (43) und ein zweites Bauteilelement (47) separat bereitgestellt und anschließend miteinander verschweißt werden, oder dass zur Herstellung des ersten und zweiten Bauteilbereichs (13, 17) ein erstes Bauteilelement (43) bereitgestellt und der zweite Bauteilbereich (17) durch Aufspritzen des zweiten Bauteilbereichs (17) in einem Spritzgießverfahren hergestellt wird.

## Revendications

1. Elément de renforcement (11) pour une structure d'un aéronef ou d'un vaisseau spatial (1), comprenant une première partie d'élément (13), qui est allongée, pour renforcer au moins un autre élément (19), et
ayant au moins une deuxième partie d'élément (17) qui est reliée de manière fixe à la première partie d'élément (13);
dans lequel la première partie d'élément (13) est formée d'une âme (14) et d'une bride (15) reliée à l'âme (14);
dans lequel ledit élément de renforcement (11) est formé en utilisant un matériau de résine thermoplastique dans chacune des parties dudit premier partie d'élément (13) et dudit second partie d'élément (17) ; et dans laquelle, dans la première partie d'élément (13), la résine thermoplastique forme une matrice dans laquelle sont noyées des fibres de renforcement continues (31), et dans la deuxième partie d'élément (17), l'elément de renforcement (11) est constitué de fibres de renforcement discontinues (37) ou est exempt de fibres de renforcement, **caractérisé en ce que** la deuxième partie d'élément (17) pour le renforcement de l'âme (14) est disposée à la manière d'une nervure orientée transversalement à l'âme (14) et à la bride (15).

2. Elément de renforcement selon la revendication 1,
**caractérisé en ce que** la première partie d'élément (13) et la deuxième partie d'élément (17) sont produites en fournissant séparément un premier élément composante (43) et un deuxième élément composante (47) et en soudant ensuite le deuxième élément composante (47) au premier élément composante (43).

3. Elément de renforcement selon la revendication 2,
**caractérisé en ce que** le deuxième élément composante (47) est moulé par injection.

4. Elément de renforcement selon la revendication 1,
**caractérisé en ce que** ladite première partie d'élément (13) et ladite seconde partie d'élément (17) sont produites en fournissant un premier élément de composant (43) et en moulant ensuite par injection ladite deuxième partie d'élément (17) sur celui-ci.

5. Elément de renforcement selon l'une des revendications précédentes,
**caractérisé en ce que** des fibres courtes ou longues sont incorporées dans la matière de résine thermoplastique en tant que fibres de renforcement (37) dans la deuxième partie d'élément (17).

6. Elément de renforcement selon l'une des revendications précédentes,
**caractérisé en ce que** l'élément de renforcement (11) est formé comme un élément de formage ou de formage.

7. Elément de renforcement selon l'une des revendications précédentes,
**caractérisé en ce que** la deuxième partie d'élément (17) est formée et agencée pour renforcer au moins partiellement la première partie d'élément (13) et/ou pour stabiliser au moins partiellement la première partie d'élément (13) contre le basculement.

8. Elément de renforcement selon l'une des revendications précédentes,
**caractérisé en ce que** ladite première partie d'élément (13) comprend en outre une partie de pied (16) reliée à ladite âme (14) pour coupler ledit élément de renforcement (11) audit autre élément (19), en particulier à un élément de peau (19), ladite deuxième partie d'élément (17) étant reliée de manière fixe à ladite partie de pied (16) et à ladite âme et serrant ladite âme (14) contre ladite partie de pied (16).

9. Elément de renforcement selon l'une des revendications précédentes,
**caractérisé en ce que** la deuxième partie d'élément (17) est formée avec une sangle (71) qui est reliée de manière fixe à la première partie d'élément (13).

10. Elément de renforcement selon l'une des revendications précédentes,
**caractérisé en ce que** la deuxième partie d'élément (17) est pourvue d'au moins un moyen (53) de fixation des composants et/ou systèmes de la cabine, ou forme un moyen de retenue des composants et/ou systèmes de la cabine.

11. Elément de renforcement selon l'une des revendications précédentes,
**caractérisé en ce que** l'élément de renforcement (11) comprend une pluralité de régions de deuxième partie d'élément (17).

12. Aéronef ou un vaisseau spatial (1) comportant un élément de renforcement (11) selon l'une des revendications précédentes.

13. Méthode de fabrication d'un élément de renforcement (11) pour une structure d'un aéronef ou d'un vaisseau spatial (1),
dans lequel une première partie d'élément allongée (13) destinée à renforcer au moins un autre élément (19) et au moins une deuxième partie d'élément (17) sont formées et reliées fixement l'une à l'autre, ladite première partie d'élément (13) étant formée avec une âme (14) et avec une bride (15) reliée à ladite âme (14),
dans lequel ledit élément de renforcement (11) est formé en utilisant un matériau de résine thermoplastique dans chacune des parties dudit premier partie d'élément (13) et dudit second partie d'élément (17), et dans laquelle la matière thermoplastique forme dans la première partie d'élément (13) une matrice dans laquelle sont noyées des fibres de renforcement continues (31), et dans la deuxième partie d'élément (17), l'élément de renforcement (11) est formé avec des fibres de renforcement discontinues (37) ou est exempt de fibres de renforcement, **caractérisé en ce que** la deuxième partie d'élément (17) pour le renforcement de l'âme (14) est disposée à la manière d'une nervure orientée transversalement à l'âme (14) et à la bride (15).

14. Méthode selon la revendication 13,
**caractérisé en ce que**, pour la fabrication de la première et de la deuxième partie d'élément (13, 17), un premier élément de composant (43) et un deuxième élément de composant (47) sont prévus séparément et sont ensuite soudés l'un à l'autre, ou **en ce que**, pour la fabrication de la première et de la deuxième partie d'élément (13, 17), un premier élément de composant (43) est prévu et la deuxième partie d'élément (17) est fabriquée par surmoulage de la deuxième partie d'élément (17) dans un procédé de moulage par injection.
